# EUROPEAN PATENT SPECIFICATION

(11) **EP 2 112 972 B1**
(45) Date of publication and mention of the grant of the patent: **15.01.2020**
(21) Application number: 08715873.9
(22) Date of filing: 20.02.2008
(51) Int. Cl.: B32B 21/10, B32B 27/04, B44C 5/04

(54) **NEW COMPOSITE MATERIALS, METHOD FOR THEIR MANUFACTURE AND THEIR USE**
NEUE VERBUNDWERKSTOFFE, VERFAHREN ZU IHRER HERSTELLUNG UND IHRE VERWENDUNG
NOUVEAUX MATÉRIAUX COMPOSITES, PROCÉDÉ POUR LEUR FABRICATION ET LEUR UTILISATION

(30) Priority: 21.02.2007 DE 102007008423; 21.02.2007 DE 102007008424; 16.03.2007 DE 102007012651; 18.06.2007 DE 102007028531
(43) Date of publication of application: 04.11.2009
(73) Proprietor: Johns Manville Europe GmbH, 86399 Bobingen (DE)
(72) Inventor: KETZER, Michael, 97903 Collenberg (DE); GLEICH, Klaus Friedrich, Highland Ranch, CO 80126 (US); CHRISTENSEN, Bernd, 97877 Wertheim (DE); JAFFEE, Alan, Wood Country, OH 43402 (US); MIELE, Phil, Highland Ranch, CO 80126 (US); BENNETT, Glenda, Toledo, OH 43614 (US); ECKERT, Bernhard, 97896 Freudenberg-Boxtal (DE); ALBRECHT, Annette, 97877 Wertheim (DE)
(74) Representative: Mai Dörr Besier European Patent Attorneys
(86) International application number: PCT/EP2008/001302
(87) International publication number: WO 2008/101678

(56) References cited:
- EP-A- 1 595 718
- WO-A-03/061964
- AT-B- 362 691
- FR-A- 1 456 777
- JP-A- 2000 025 016
- US-A- 4 439 481
- US-A1- 2005 266 221
- US-A1- 2006 054 265
- US-A1- 2006 234 026
- DATABASE WPI Week 198837 Thomson Scientific, London, GB; AN 1988-261785 XP002528951 & JP 63 191629 A (MITSUBISHI HEAVY IND CO LTD) 9 August 1988 (1988-08-09)

## Description

The invention relates to new composite materials suitable in particular as materials in interior construction, for linings, constructions and for the manufacture of furniture and similar products.

Composite materials are increasingly replacing traditional building materials as construction materials and must be adapted for manifold applications. Thus, on the one hand a sufficient mechanical stability is required and on the other hand a good workability and low weight are necessary. There has therefore been no lack of attempts to improve existing composite materials.

Thus, the combining of wood materials, which are manufactured from comminuted wood and the use of binders, with further materials is already known. To this end, the two materials are usually laminated and form a composite material. The selection and combination of the materials can improve the mechanical properties and at the same time a reduction, e.g. of the weight, can be achieved.

Composite materials based on wooden materials and non-woven fabrics strengthened by a "B" stage binder are known from WO2006/031522. The base non-woven fabrics are known, e.g., from US-A-5,837,620, US-A-303,207 and US-A-6,331,339. The cited publications do disclose in a general manner that further additives can be added to the binder and/or to the non-woven fabric but more detailed data is not given.

JP-A-2000025016 discloses a decorative laminate of base plate, non-woven fabric sheet impregnated with semi-hardened thermoplastic or thermosetting resin and decorative timber material, which is heat pressed to adhere the layers strongly.

There was therefore the task of optimizing the already known products with regard to their application technology properties and to the manufacturing processes.

Subject matter of the present invention is a method for the manufacture of a composite material as defined in claims 1 to 11.

The carrier used in accordance with step a) is wooden materials, papers, cork, cardboards and/or mineral plates.

The wooden materials are plate-shaped or strand-shaped wooden materials manufactured by mixing the different wooden particle forms with natural and/or synthetic binding agents during a hot pressing. The wooden materials used in accordance with the invention preferably comprise plywood or laminated wood, wood-chip material, especially chipboards and OSB (Oriented Strand Boards), wood fiber material, especially porous wood fiber boards, open-diffusion wood fiber boards, hard (high-density) wood fiber boards (HDF) and medium-density wood fiber boards (MDF), and Arboform. Arboform is a thermoplastically workable material of lignin and other wood components.

The papers are preferably papers on the basis of natural, synthetic, mineral or ceramic fibers or also of mixtures of these fiber types.

The cardboards are preferably cardboards on the basis of natural and/or synthetic fibers, which also comprise mineral and/or ceramic fibers as well as mixtures of these fiber types.

The mineral plates are preferably commercial mineral cardboard plates with cardboard coating on both sides, gypsum fiber plates, ceramic fiber plates, cement plates or lime plates. The plates can optionally be reinforced with natural and/or synthetic fibers, wherein these can also comprise mineral and/or ceramic fibers. The reinforcement fibers can be present in the form of filaments, monofilaments or as staple fibers.

In addition to the described materials the carrier can also consist of cork or other vegetable materials.

The weight per unit area of the carriers contained in the composite material is a function of the final application and is not subject to any particular limitation.

The textile surface structures used in accordance with step b) of the invention is subject to a strengthening as defined in claim 1, 12 , 17 and 21.

The textile surface structures to be provided with the B-stage binder can also basically be used without binders, in particular chemical binders. However, in order to ensure the required strengths in the further working of the surface structures binders can also be introduced and/or known needling methods can be used. In addition to the possibility of a mechanical strengthening, e.g., by calendering or needling, in particular the hydrodynamic needling is also mentioned here. Chemical and/or thermoplastic binders are suitable as binders.

However, the textile surface structures to be provided with the B-stage binder are preferably pre-strengthened a with a chemical binder. The binders used can be the same or different but must be selected from the group of the binder systems compatible with the B-stage binder. The additional binder component is maximally 25 % by weight, preferably 10 % by weight or less; the minimum content is 0.5 % by weight, preferably a minimum of 1 % by weight.

The fiber-forming materials are fibers of synthesized polymers, ceramic fibers, mineral fibers or glass fibers that can also be used in the form of mixtures. Textile surfaces are considered to be non-woven fabrics.

The textile surfaces of mineral- and ceramic fibers are aluminosilicate fibers, ceramic fibers, dolomite fibers, wollastonite fibers or fibers of vulcanites, preferably basalt fibers, diabase fibers and/or melaphyr fibers, especially basalt fibers. Daibases and melaphyrs are designated combined as paleobasalts and diabase is also often designated as greenstone.

The mineral fiber non-woven fabric can be formed from filaments, that is, infinitely long fibers or of staple fibers. The average length of the staple fibers in the non-woven fabric of mineral fibers used in accordance with the invention is between 5 and 120 mm, preferably 10 to 90 mm. In a further embodiment of the invention the mineral fiber non-woven fabric contains a mixture of endless fibers and staple fibers. The average fiber diameter of the mineral fibers is between 5 and 30 µm, preferably between 8 and 24 µm, especially preferably between 8 and 15 µm. The weight per unit area of the textile surface structure of mineral fibers is between 15 and 500 g/m², preferably 40 and 250 g/m², wherein these data refer to a surface structure without binders.

In the case of the textile fibers, glass fibers non-woven fabrics are particularly preferred. They are constructed from filaments, that is, infinitely long fibers or of staple fibers. The average length of the staple fibers is between 5 and 120 mm, preferably 10 to 90 mm. In a further embodiment of the invention the glass fiber non-woven fabric contains a mixture of endless fibers and staple fibers.

The average diameter of the glass fibers is between 5 and 30 µm, preferably between 8 and 24 µm, especially preferably between 10 and 21 µm.

In addition to the previously cited diameters so-called glass microfibers can also be used. The preferred average diameter of the glass microfibers is between 0.1 and 5 µm. The microfibers forming the textile surface can also be present in mixtures with other fibers, preferably glass fibers. Moreover, a layer-shaped construction of microfibers and glass fibers is also possible.

The textile surface structure can also additionally have a reinforcement of fibers, threads or filaments. Reinforcement threads are preferably multi-filaments or rovings based on glass, polyester, carbon or metal. The reinforcement threads can be used as such or also in the form of a textile surface structure, e.g., as fabric, laying, knitted fabric, knitwear or non-woven fabric. The reinforcements preferably consist of a parallel thread sheet or of a laying.

The weight per unit area of the textile surface structure of glass fibers is between 15 and 500 g/m², preferably 40 and 250 g/m², wherein the data refers to a surface structure without binders.

Suitable glass fibers comprise those manufactured from A- glass, E-glass, S-glass, T-glass or R-glass.

The textile surface can be manufactured according to any known method. For glass non-woven fabrics this is preferably the dry- or wet laying method.

Among the textile surfaces of fibers of synthetic polymers, non-woven fabrics, especially so-called spun bonds, that is, spunbonded non-woven fabrics produced by a tangled deposit of melt-spun filaments, are preferred. They consist of endless synthetic fibers of melt-spinnable polymer materials. Suitable polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether- and keto groups such as, e.g., polyetherketones (PEK) and polyetheretherketone (PEEK), polyolefins such as, e.g., polyethylene or polypropylene, cellulose or polybenzimidazoles. In addition to the previously cited synthetic polymers, those polymers are also suited that are spun from solution.

The spunbonded non-woven fabrics preferably consist of melt-spinnable polyesters. In principle, all known types of polyester material suitable for the manufacture of fibers are considered as polyester material. Polyesters containing at least 95 mole % polyethyleneterephthalate (PET), especially those of unmodified PET, are especially preferable.

If the composite materials in accordance with the invention should additionally have a flame-retardant action, it is advantageous if they were spun from polyesters modified in a flame-retardant manner. Such polyesters modified in a flame-retardant manner are known.

The individual titers of the polyester filaments in the spunbonded non-woven fabric are between 1 and 16 dtex, preferably 2 to 10 dtex.

In a further embodiment of the invention the spunbonded non-woven fabric can also be a bonded fiber fabric hardened by melt binder and which contains carrier fibers and melded fibers. The carrier fibers and melded fibers can be derived from any thermoplastic, fiber-forming polymers. Such spunbonded non-woven fabrics hardened by melt binder are described, e.g., in EP-A-0,446,822 and EP-A-0,590,629.

In addition to endless filaments (spunbond method) the textile surface can also be constructed of staple fibers or mixtures of staple fibers and endless filaments. The individual titers of the staple fibers in the non-woven fabric are between 1 and 16 dtex, preferably 2 to 10 dtex. The staple length is 1 to 100 mm, preferably 2 to 500 mm, especially preferably 2 to 30 mm. The textile surface structure can also be constructed of fibers of different materials in order to be able to achieve special properties.

The textile surface structure can also additionally have a reinforcement of fibers, threads or filaments. Multi-filaments or rovings based on glass, polyester, carbon or metal are preferred as reinforcement threads. The reinforcement threads can be used as such or also in the form of a textile surface structure, e.g., as fabric, laying, knitted fabric, knitwear or non-woven fabric. The reinforcements preferably consist of a parallel thread sheet or a laying.

The filaments and/or staple fibers constructing the bonded fiber fabric can have a practically round cross-section or also other forms such as dumbbell-shaped, kidney-shaped, triangular or tri- or multi-lobed cross-sections. Hollow fibers and bi-or multi-component fibers can also be used. Furthermore, the melded fibers can also be used in the form of bi-component or multi-component fibers.

The fibers forming the textile surface structure can be modified by customary additives, e.g., by antistatic agents such as carbon black.

The weight per unit area of the textile surface structure of fibers of synthetic polymers is between 10 and 500 g/m², preferably 20 and 250 g/m².

The textile surface structure used according to step b), which is applied at least on one side of the carrier, comprises at least one binder in the B-stage state.

B-stage binders denotes binders that are only partially strengthened or hardened and can still experience a final hardening, e.g., by thermal post-treatment. Such B-stage binders are exhaustively described in US-A-5,837,620, US-A-6,303,207 and US-A-6,331,339. The B-stage binders disclosed there are also subject matter of the present description. B-stage binders are preferably binders based on furfuryl alcohol formaldehyde, phenol formaldehyde, melamine formaldehyde, urea formaldehyde and their mixtures. Preferably, aqueous systems are concerned. Further preferred binder systems are formaldehyde-free binders. B-stage binders are distinguished in that they can be subjected to a multistage hardening, that is, they still have a sufficient binding action after the first hardening or after the first hardenings so that they can be used for the further processing.

Such binders are usually hardened after the addition of a catalyst at temperatures of ca. 350°F in one step.

In order to form the B-stage, such binders are optionally hardened after the addition of a catalyst. The amount of hardening catalyst is up to 10% by weight, preferably 0.25 to 7% by weight (relative to the total binder content). For example, ammonium nitrate as well as organic aromatic acids, e.g., maleic acid and p-toluene sulfonic acid are suitable as hardening catalyst since it allows the B-stage state to be more rapidly reached. In addition to ammonium nitrate, maleic acid and p-toluene sulfonic acid, all materials are suitable as hardening catalyst that have a comparable acidic function. In order to reach the B-stage the textile surface structure impregnated with the binder is dried under the influence of temperature without producing a complete hardening. The necessary process parameters are dependent on the binder system selected.

The lower as well as the upper temperature limit can be influenced by the selection of the duration and/or by adding or avoiding rather large or rather strong acidic hardening catalysts and/or by optionally using stabilizers.

The application of the B-stage binder onto the textile surface structure designated in measure b) can take place with the aid of all known methods. In addition to spraying on, impregnating and pressing in, the binder can also be applied by coating or by rotary nozzle heads.

A further preferred method is the application of the B-stage binder by the application of foam. In the application of foam a binder foam is produced with the aid of a foaming agent in a foam mixer that is applied by suitable coating aggregates onto the non-woven fabric. The application can also take place here by rotary nozzle heads.

In the foam coating of a B-stage-capable binder there are basically no limitations regarding the foaming agent. Preferred foaming agents are ammonium stearates or succinic acid esters added with 1% - 5% by weight in dry mass to the binder. Furthermore, the already described catalysts are mixed in if required. The solids content of the foam is at least 40%, preferably at least 50%.

The process of foam application makes possible an extremely flexible process control and permits the realization of a plurality of different product properties. In addition to the purposeful adjusting of the penetration depth of the foam into the textile surface the binder charge and porosity can vary within broad limits. In addition, the application of foam offers great advantages in the process control, especially regarding the constancy of the solids content during the impregnating or coating of the textile surface and the required compatibility requirements of the surface manufacturing process on the binder.

The functional material used according to step b) is applied after the application of the binder. In as far as the B-stage binder is applied by foam application it is advantageous to apply the functional material onto the still fresh foam.

The functional material used according to step b) is preferably flameproofing agents, materials for discharging electrostatic charges, materials for screening off electromagnetic rays, organic or inorganic pigments, especially colored pigments, materials that increase the resistance to wear and/or slippage, or decorative layers. The functional materials are preferably arranged on the side of the textile surface structure facing away from the carrier and can at least partially pass through the non-woven fabric.

In a variant of the method an additional binder is added to fix the functional materials on the textile surface structure. The same binder (B-stage binder) as is present in the textile surface structure is preferably selected here. The content of functional materials is determined by the subsequent use.

The flameproofing agents are inorganic flameproofing agents, organophosphorus flameproofing agents, nitrogen-based flameproofing agents or intumescence flameproofing agents. Halogenated (brominated and chlorinated) flameproofing agents can also be used but are less preferred on account of their risk evaluation. Examples for such halogenated flameproofing agents are polybrominated diphenylether, e.g., decaBDE, tetrabromobisphenol A and HBCD (hexabromocyclododecane).

The nitrogen-based flameproofing agents are melamines and urea.

The organophosphorus flameproofing agents are typically aromatic and alkyl esters of phosphoric acid. TCEP (trischloroethylphosphate), TCCP (trischloropropylphosphate), TDCCP (trisdichloroisopropylphosphate), triphenylphosphate, trioctylphosphate (tris-(2-ethylhexyl)phosphate) are preferably used.

The inorganic flameproofing agents are typically hydroxides such as aluminum hydroxide and magnesium hydroxide, borates such as zinc borate, ammonium compounds such as ammonium sulfate, red phosphorus, antimony oxides such as antimony trioxide and antimony pentoxide and/or laminated silicates such as vermiculite.

Antistatic- and electromagnetic screening effects can be achieved by the use of agents for raising the electrical conductivity.

The antistatic agents are usually particles that are electrically conductive. Suitable materials are electrically conductive carbons such as carbon black, graphite and carbon nanotubes (C-nanotubes), conductive plastics or fibers of metal or metallic components.

The materials for screening electromagnetic rays are usually electrically conductive materials. They can be built up in the form of foils, particles, fibers or wires and/or textiles surface structures of the previously cited materials.

The inorganic or organic pigments are particulate materials. In addition to fillers such as CaCO3, talcum, gypsum or silica, the pigments, to the extent that they should increase the value of the composite material, are in particular pigments that can be used in colors.

In addition to increasing the value, materials are also used that increase the application suitability. In particular an anti-slippage coating is to be understood here as well as a coating that ensures an increased wear protection, here SiC and/or SiO2 particles are used for the anti-slippage coating with a grain size of preferably 2 - 5 mm. The amount is 1 - 40%, preferably 10 - 30%. In order to increase the effectiveness of the coating and to reduce the amount of the coating used the surface can additionally be structured.

Comparable materials are used for the surface enhancement in order to improve the abrasion and hardness. However, grain sizes of below 1 mm are used, which can produce a very hard surface.

In as far as the functional layer should be an anti-slippage coating, it is advantageous if it or the basic particles are present entirely or at least partially worked into the textile surface structure and/or the B-stage binder. In particular in the case of an anti-slippage coating and service enhancement in order to improve the abrasion and hardness it is advantageous if the particles are applied on to the textile surface structure in such a manner that the particles project at least partially from the surface of the textile surface structure. The resulting rugosity, in particular for an anti-slippage coating, must meet the appropriate national norms and regulations.

The decorative layers are decorative elements. This is understood to include decorative layers and patterns that increase the value of the composite material. In the instant invention, the decorative layer is decorative paper. that is also designated as decorative semifinished product. For their part, these decorative semifinished products can contain B-stage-capable binders and/or one or more textile surfaces being non-wovens or non-woven fabric layers.

The application of the functional material used in accordance with step b) takes place as a function of the nature of the particular functional material by known techniques. The application can also take place here by rotary nozzle heads.

The lamination of the construction obtained according to step b) takes place in step c) under the action of pressure and heat in such a manner that the binder present in the B stage receives its final hardening. The lamination can take place by discontinuous or continuous pressing or by rolling. The parameters of pressure, temperature and dwell time are selected in accordance with the B-stage binder used.

The application of at least one further protective layer and its drying in accordance with step d) takes place by known pressure, spraying and lacquering technologies. The application can also take place here by rotary nozzle heads. The drying of the protective layer takes place as a function of the selected system.

The protective layers are usually lacquers such as powdered lacquers, clear lacquers or transparent lacquers, preferably scratch-proof lacquers that protect the functional layer against mechanical influences or against UV ageing.

In a variant of the method in accordance with the invention in measure b) even only the textile surface structure can be applied with at least one binder in the B-stage state and the providing with at least one functional material can take place in a step after measure b).

Such a method - also comprised by the present invention - comprises the measures:
I) supplying of a carrier,
II) application of the textile surface structure on at least one surface of the carrier, the textile surface structure having at least one binder in the B-stage state and said textile surface structure was subjected to a strengthening by thermoplastic and/or chemical binders or by physical needling methods and/or the action of pressure before it was provided with the B-stage binder,
III) optional lamination of the construction obtained according to step II) under the action of pressure and heat so that the binder present in the B stage partially hardens;
IV) application of at least one functional material on the side of the textile surface structure facing away from the carrier, said functional material is a flameproofing agent, material for discharging electrostatic charges, material for screening off electromagnetic rays, organic or inorganic pigment, especially colored pigment, an anti-slippage coating and/or a coating with an elevated wear protection, the anti-slippage coating including SiC and/or SiO2 particles, preferably with a grain size of 2 to 5 mm, and the coating with an elevated wear protection including SiC and/or SiO2 particles whose grain size is below 1 mm, or decorative papers,
V) optional lamination of the construction obtained according to step IV) under the action of pressure and heat so that the binder present in the B stage receives its final hardening,
VI) optional application of at least one further protective layer and drying.

The measures I), V) and VI) are identical with the initially cited measures a), c) and d). The application of the textile surface structure containing at least one binder in the B-stage state takes place according to step II) as initially described under measure b), wherein the functional material is not present.

The lamination according to measure III) and VI) takes place under the action of pressure and heat in such a manner that the binder present in the B stage receives its partial or final hardening. The lamination can take place by discontinuous or continuous pressing or by rolling. The parameters of pressure, temperature and dwell time are selected in accordance with the B-stage binder used.

The functional material used according to measure IV) is the functional materials initially described under b), and is the cited flameproofing materials, materials for discharging electrostatic charges, materials for screening off electromagnetic rays, organic or inorganic pigments, especially colored pigments, materials that increase the resistance to wear and/or slippage, or decorative papers.

In order to fix the functional materials a binder can be additionally added for fixing the functional materials on the textile surface structure. The same binder (B-stage binder) is preferably selected here as is present in the textile surface structure. The content of functional material is determined by the subsequent use.

The application of the functional material in accordance with measure IV) takes place as a function of the nature of the particular functional material by known techniques. The application can also take place here by rotary nozzle heads.

In as far as the B-stage binder or the additional binder is applied by foam application it is advantageous to apply the functional material in accordance with measure IV) with the foam or distributed in the foam or to apply the functional material onto the still fresh foam.

In addition to the above-described method, even the composite materials as such are not known from the state of the art.

Thus, further subject matter of the present invention is a composite material as defined in claims 12 to 16.

Variations and modifications of the method in accordance with the invention are possible by using selected textile surface structures.

Further subject matter of the present invention is a method for manufacturing a composite material comprising the measures:
a) supplying of a carrier,
b) application of the textile surface structure on at least one surface of the carrier, the textile surface structure having at least one binder in the B-stage state, and wherein textile surface structure is a nonwoven being formed from fibers of synthesized polymers, ceramic fibers, mineral fibers or glass fibers and mixtures thereof, and was subjected to a strengthening by thermoplastic and/or chemical binders or by physical needling methods and/or the action of pressure before it was provided with the b-stage binder,
c) optional application of at least one functional material said functional material is a flameproofing agent, material for discharging electrostatic charges, material for screening off electromagnetic rays, organic or inorganic pigment, especially colored pigment, an anti-slippage coating and/or a coating with an elevated wear protection, the anti-slippage coating including SiC and/or SiO2 particles, preferably with a grain size of 2 to 5 mm, and the coating with an elevated wear protection including SiC and/or SiO2 particles whose grain size is below 1 mm, or decorative papers,
d) lamination of the construction obtained according to step b) or step c) under the action of pressure and heat so that the binder present in the B stage receives its final hardening,
e) optional application of at least one further protective layer and drying.

The strengthening of the textile surface structure designated in measure b) takes place by the mechanical influence of force, preferably by needling and/or calendering and/or pressing, and/or by chemical and/or thermoplastic binders. The binders used can be the same or different but must be selected from the group of the binder systems compatible with the B-stage binder. The additional binder component, that is, the binder component that is allotted to the pre-strengthening, is maximally 25% by weight, preferably 10% by weight or less; the minimum content is 0.5% by weight, preferably 1% by weight.

The textile surface structures to be provided with the B-stage binder are preferably pre-strengthened with a chemical binder.

The application of the functional material optionally used in accordance with step c) takes place as a function of the nature of the particular functional material with known technologies. The application or the introduction can also take place here by rotary nozzle heads.

The measures d) and e) - as described initially under the measures c) and d) - are carried out subsequently.

Conditioned by the selection of pre-strengthened textile surface structures, these composite materials can be more readily processed further and reduce the manufacturing expense.

Further subject matter of the present invention is thus a semifinished product as defined in claims 17 to 20.

The additional strengthening of the textile surface structure designated in measure b) takes place by the mechanical action of force, preferably by needling and/or calendering and/or pressing, and/or by chemical and/or thermoplastic binders. The additionally used binders can be the same or different but must be selected from the group of the binder systems compatible with the B-stage binder. The additional binder component, that is, the binder component allotted to the pre-strengthening, is maximally 25 % by weight, preferably 10 % by weight or less; the minimum content is 0.5 % by weight, preferably a minimum of 1 % by weight. The additional strengthening of the textile surface structure preferably takes place before the application of the B-stage binder. The textile surface structures to be provided with the B-stage binder are preferably pre-strengthened with a chemical binder.

Changeovers in the production can be realized more readily and more rapidly and thus more economically by a high degree of pre-strengthening. This flexibility constitutes a significant economic advantage.

In as far as the above semifinished products are already provided with the functional material, they are already the finished composite materials.

Further subject matter of the present invention is thus a semifinished product comprising at least one textile surface structure comprising at least one binder in the B stage and wherein the textile surface structure has an additional strengthening.

Furthermore, the invention also comprises decorative semifinished products, in particular CPL and HPL, as defined in claims 21 to 24.

CPL and HPL typically consist of several, usually 2-50 layers of kraft paper that are impregnated with a melamine, MUF or phenol B-stage binder. In as far as these CPL's and/or HPL's comprise at least one non-woven fabric containing a B-stage binder, a significant reduction of the number of layers of kraft paper up to a complete replacement of the paper layers can take place.

The use of a non-woven fabric comprising a B-stage binder reduces the number of layers of kraft paper by at least one layer, but preferably by at least 50% of the layers of kraft paper with otherwise identical properties of the laminate. The reduction of the amount of binder-impregnated kraft paper allows an improvement of the fire classification, which can extend to the classification of "noncombustible". The decorative semifinished products, in particular CPL and/or HPL according to the instant invention have pre-strengthened nonwoven. This can result in a further reduction of kraft paper layers.

The CPL's and/or HPL's in accordance with the invention preferably have between 1 and 25 layers of a non-woven fabric with a B-stage binder. In addition, the CPL's and/or HPL's in accordance with the invention can have even more layers of kraft paper impregnated with a melamine, MUF or phenol B-stage binder.

The manufacture of the decorative semifinished product takes place by lamination under the action of pressure and heat in such a manner that the binder present in the B stage is finally hardened. The lamination can takes place by discontinuous or continuous pressing or by rolling. The parameters of pressure, temperature and dwell time are selected in accordance with the B-stage binder used.

The previously cited materials are suitable as carrier, textile surface structure, B-stage binder, functional material and protective layer. The preferred embodiments disclosed in the scope of the method in accordance with the invention also apply to the composite material of the invention.

The previously cited functional material can be present in the form of an independent layer applied in the B stage on the side of the textile surface structure facing away from the carrier or can also entirely or partially penetrate the textile surface structure. These embodiments are suitable for functional materials such as flameproofing agents, materials for discharging electrostatic charges, materials for screening off electromagnetic charges, materials for screening off electromagnetic rays, organic or inorganic pigments, especially colored pigments or decorative papers.

In a preferred embodiment the functional material forms a discrete layer in the composite material of the invention. This embodiment is especially suitable for functional materials that increase the resistance to wear and/or slippage and/or increase the value by the optical effect of the surface. It is especially advantageous if the functional material is to make anti-slippage material or an increased resistance to wear if the basic particles project at least partially from the textile surface structure provided with the B-stage binder.

The functional material is present on the side of the textile surface structure facing away from the carrier.

The composite material in accordance with the invention makes possible a direct workability for the subsequent applications since the composite material already contains the necessary provisioning with functional material.

In a variant the application of an equipped textile surface structure in accordance with step b) can also take place during the manufacturing of the carrier. In other words, instead of the finished carrier in step a), the carrier is formed in step a).

The pressing of the formed carrier takes place together with the equipped textile surface structure, the textile surface structure being appropriately introduced into the pressing and/or drying apparatus for the carrier. The manufacture of the carrier-non-woven fabric composite can take place continuously or discontinuously.

## Claims

1. A method for manufacturing a composite material comprising the measures:
a) Supplying of a carrier, said carrier being selected from the group of wooden materials, papers, cork, cardboards or mineral plates,
b) Application of a textile surface structure onto at least one surface of the carrier, the textile surface structure having at least one binder in the B-stage state and having at least one functional material said functional material is applied after the binder,
said textile surface structure was subjected to a strengthening by thermoplastic and/or chemical binders or by physical needling methods and/or the action of pressure before it was provided with the B-stage binder,
said textile surface structure is a nonwoven being formed from fibers of synthesized polymers, ceramic fibers, mineral fibers or glass fibers and mixtures thereof, said functional material is a flameproofing agent, material for discharging electrostatic charges, material for screening off electromagnetic rays, organic or inorganic pigment, especially colored pigment, an anti-slippage coating and/or a coating with an elevated wear protection, the anti-slippage coating including SiC and/or SiO2 particles, preferably with a grain size of 2 to 5 mm, and the coating with an elevated wear protection including SiC and/or SiO2 particles whose grain size is below 1 mm, or decorative papers,
c) Lamination of the construction obtained according to step b) under the action of pressure and heat so that the binder present in the B stage receives its final hardening,
d) Optional application of at least one further protective layer and drying.

2. The method according to claim 1, **characterized in that** the wooden materials are plate-shaped or strand-shaped wooden materials.

3. The method according to claim 2, **characterized in that** the wooden materials are plywood or laminated wood, wood-chip material, preferably chipboards and OSB (Oriented Strand Boards), wood fiber material, preferably porous wood fiber boards, open-diffusion wood fiber boards, hard (high-density) wood fiber boards (HDF) and medium-density wood fiber boards (MDF), and Arboform.

4. The method according to claim 1, **characterized in that** the mineral plates are plates with cardboard coating on both sides, especially gypsum fiber plates, ceramic fiber plates, cement plates or lime plates that can optionally be reinforced with natural and/or synthetic fibers, wherein the latter can also comprise mineral and/or ceramic fibers.

5. The method according to any one of claims 1 to 4, **characterized in that** the non-woven fabric additionally has a reinforcement of fibers, threads or filaments.

6. The method according to any one of claims 1 to 5, **characterized in that** the textile surface structure is a glass fiber non-woven fabric of filaments and/or of staple fibers.

7. The method according to claim 6, **characterized in that** the glass fiber non-woven fabric comprises glass microfibers whose average diameter is between 0.1 and 5 µm.

8. The method according to claim 6, **characterized in that** the glass fiber non-woven fabric has a weight per unit area of 15 to 500 g/m², wherein these data refer to a surface structure without binders.

9. The method according to any one of claims 1 to 8, **characterized in that** the non-woven fabric is a spunbonded non-woven fabric.

10. The method according to claim 1, **characterized in that** the binder is a binder based on furfuryl alcohol formaldehyde, phenol formaldehyde, melamine formaldehyde, urea formaldehyde and their mixtures.

11. The method according to any one of claims 1 to 10, **characterized in that** the lamination in step c) takes place by discontinuous or continuous pressing or by rolling.

12. A composite material comprising:
a) a carrier, said carrier being selected from the group of wooden materials, papers, cork, cardboards or mineral plates, and,
b) at least one textile surface structure applied onto at least one of the two sides of the carrier, which surface structure comprises at least one finally hardened B-stage binder, said textile surface structure is a nonwoven being formed from fibers of synthesized polymers, ceramic fibers, mineral fibers or glass fibers and mixtures thereof, and
said textile surface structure was subjected to a strengthening by thermoplastic and/or chemical binders or by physical needling methods and/or the action of pressure before it was provided with the B-stage binder,
c) at least one functional material applied on the top of the textile surface structure provided with the B-stage binder, said functional material is a flameproofing agent, material for discharging electrostatic charges, material for screening off electromagnetic rays, organic or inorganic pigment, especially colored pigment, an anti-slippage coating and/or a coating with an elevated wear protection, the anti-slippage coating including SiC and/or SiO2 particles, preferably with a grain size of 2 to 5 mm, and the coating with an elevated wear protection including SiC and/or SiO2 particles whose grain size is below 1 mm, or decorative papers, and
d) optionally further protective layers applied on the functional material.

13. The Composite material according to claim 12, **characterized in that** the carrier is defined in claims 2 to 4.

14. The Composite material according to claim 12 **characterized in that** the textile surface structure is defined in claims 5 to 9.

15. The Composite material according to claim 12, **characterized in that** the B-stage binder is defined in claim 10.

16. The Composite material according to claim 12, **characterized in that** the functional material is present in the form of an independent layer applied in the B stage on the side of the textile surface structure facing away from the carrier or entirely or partially penetrates the textile surface structure.

17. A semifinished product comprising
a) a carrier, said carrier being selected from the group of wooden materials, papers, cork, cardboards or mineral plates, and
b) at least one textile surface structure applied onto at least one of the two surfaces of the carrier, which textile surface structure has at least one binder in the B stage and having at least one functional material applied on the top of the textile surface structure provided with the B-stage binder, said textile surface structure is a nonwoven being formed from fibers of synthesized polymers, ceramic fibers, mineral fibers or glass fibers and mixtures thereof, and wherein the textile surface structure has an additional strengthening by thermoplastic and/or chemical binders or by physical needling methods before it was provided with the B-stage binder and said functional material is a flameproofing agent, material for discharging electrostatic charges, material for screening off electromagnetic rays, organic or inorganic pigment, especially colored pigment, an anti-slippage coating and/or a coating with an elevated wear protection, the anti-slippage coating including SiC and/or SiO2 particles, preferably with a grain size of 2 to 5 mm, and the coating with an elevated wear protection including SiC and/or SiO2 particles whose grain size is below 1 mm, or decorative paper.

18. The semifinished product according to claim 17, **characterized in that** the carrier is defined in claims 2 to 4.

19. The semifinished product according to claim 17, **characterized in that** the textile surface structure is defined in claims 5 to 9.

20. The semifinished product according to claim 17, **characterized in that** the B-stage binder is defined in claim 10.

21. Decorative semifinished products comprising at least textile surface structure being formed from fibers of synthesized polymers, ceramic fibers, mineral fibers or glass fibers and mixtures thereof, containing B-stage binder in the B-stage state,
said textile surface structure has an additional strengthening by thermoplastic and/or chemical binders or by physical needling methods and/or the action of pressure before it was provided with the B-stage binder,
said textile surface structure is a nonwoven comprising at least one functional material layer, said functional material is a flameproofing agent, material for discharging electrostatic charges, material for screening off electromagnetic rays, organic or inorganic pigment, especially colored pigment, an anti-slippage coating and/or a coating with an elevated wear protection, the anti-slippage coating including SiC and/or SiO2 particles, preferably with a grain size of 2 to 5 mm, and the coating with an elevated wear protection including SiC and/or SiO2 particles whose grain size is below 1 mm, or decorative paper and said at least one functional material being applied on the top of the textile surface structure provided with the B-stage binder.

22. The decorative semifinished products according to claim 21, **characterized in that** they comprise at least one carrier, said carrier being selected from the group of wooden materials, papers, cork, cardboards or mineral plates.

23. The decorative semifinished products according to claim 21, **characterized in that** they comprise between 1 and 25 layers of said textile surface structure.

24. The decorative semifinished products according to claim 21, **characterized in that** they additionally comprise several layers of kraft paper impregnated with a melanine, MUF or phenol B-stage binder.

## Patentansprüche

1. Verfahren zur Herstellung eines Verbundmaterials, umfassend die Maßnahmen:
a) Bereitstellen eines Trägers, wobei der Träger aus der Gruppe Holzwerkstoffe, Papiere, Kork, Pappen oder Mineralplatten ausgewählt ist,
b) Aufbringen einer textilen Oberflächenstruktur auf mindestens eine Oberfläche des Trägers, wobei die textile Oberflächenstruktur mindestens ein Bindemittel im B-Stage-Zustand aufweist und mindestens ein funktionelles Material aufweist, wobei das funktionelle Material nach dem Bindemittel aufgebracht wird,
wobei die textile Oberflächenstruktur einer Verstärkung durch thermoplastische und/oder chemische Bindemittel oder durch physikalische Nadelungsverfahren und/oder die Einwirkung von Druck ausgesetzt wurde, bevor sie mit dem B-Stage-Bindemittel versehen wurde,
wobei es sich bei der textilen Oberflächenstruktur um ein Vlies handelt, das aus Fasern von synthetisierten Polymeren, Keramikfasern, Mineralfasern oder Glasfasern und Mischungen davon gebildet ist, wobei das funktionelle Material ein Flammschutzmittel, ein Material zum Entladen elektrostatischer Ladungen, ein Material zum Abschirmen von elektromagnetischen Strahlen, ein organisches oder anorganisches Pigment, insbesondere ein Farbpigment, eine Antirutschbeschichtung und/oder eine Beschichtung mit erhöhtem Verschleißschutz, wobei die Antirutschbeschichtung SiC- und/oder SiO₂-Partikel einschließt, vorzugsweise mit einer Korngröße von 2 bis 5 mm, und die Beschichtung mit erhöhtem Verschleißschutz SiC- und/oder SiO₂-Partikel einschließt, deren Körnung unter 1 mm liegt, oder Dekorpapier ist,
c) Laminieren des gemäß Schritt b) erhaltenen Aufbaus unter Einwirkung von Druck und Wärme, so dass das im B-Stage vorhandene Bindemittel seine endgültige Aushärtung erhält,
d) gegebenenfalls Aufbringen von mindestens einer weiteren Schutzschicht und Trocknung.

2. Verfahren nach Anspruch 1, **dadurch gekennzeichnet, dass** die Holzwerkstoffe plattenförmige oder strangförmige Holzwerkstoffe sind.

3. Verfahren nach Anspruch 2, **dadurch gekennzeichnet, dass** die Holzwerkstoffe Sperrholz oder Schichtholz, Hackschnitzel, vorzugsweise Spanplatten und OSB (Oriented Strand Boards), Holzfasermaterial, vorzugsweise poröse Holzfaserplatten, diffusionsoffene Holzfaserplatten, harte (hochdichte) Holzfaserplatten (HDF) und mitteldichte Holzfaserplatten (MDF) sowie Arboform sind.

4. Verfahren nach Anspruch 1, **dadurch gekennzeichnet, dass** die Mineralplatten beidseitig kartonbeschichtete Platten sind, insbesondere Gipsfaserplatten, Keramikfaserplatten, Zementplatten oder Kalkplatten, die gegebenenfalls mit natürlichen und/oder synthetischen Fasern verstärkt sein können, wobei letztere auch mineralische und/oder keramische Fasern umfassen können.

5. Verfahren nach einem der Ansprüche 1 bis 4, **dadurch gekennzeichnet, dass** das Vlies zusätzlich eine Verstärkung aus Fasern, Fäden oder Filamenten aufweist.

6. Verfahren nach einem der Ansprüche 1 bis 5, **dadurch gekennzeichnet, dass** die textile Oberflächenstruktur ein Glasfaservlies von Filamenten und/oder Stapelfasern ist.

7. Verfahren nach Anspruch 6, **dadurch gekennzeichnet, dass** das Glasfaservlies Glasmikrofasern mit einem durchschnittlichen Durchmesser zwischen 0,1 und 5 µm umfasst.

8. Verfahren nach Anspruch 6, **dadurch gekennzeichnet, dass** das Glasfaservlies ein Flächengewicht von 15 bis 500 g/m² aufweist, wobei sich diese Angaben auf eine Oberflächenstruktur ohne Bindemittel beziehen.

9. Verfahren nach einem der Ansprüche 1 bis 8, **dadurch gekennzeichnet, dass** das Vlies ein Spinnvlies ist.

10. Verfahren nach Anspruch 1, **dadurch gekennzeichnet, dass** das Bindemittel ein Bindemittel auf Basis von Furfurylalkoholformaldehyd, Phenolformaldehyd, Melaminformaldehyd, Harnstoffformaldehyd und deren Mischungen ist.

11. Verfahren nach einem der Ansprüche 1 bis 10, **dadurch gekennzeichnet, dass** das Laminieren in Schritt c) durch diskontinuierliches oder kontinuierliches Pressen oder durch Walzen erfolgt.

12. Verbundmaterial, umfassend:
a) einen Träger, wobei der Träger aus der Gruppe Holzwerkstoffe, Papiere, Kork, Pappen oder Mineralplatten ausgewählt ist, und
b) mindestens eine textile Oberflächenstruktur, die auf mindestens eine der beiden Seiten des Trägers aufgebracht ist, wobei die Oberflächenstruktur mindestens ein endgültig ausgehärtetes B-Stage-Bindemittel umfasst, wobei es sich bei der textilen Oberflächenstruktur um ein Vlies handelt, das aus Fasern von synthetisierten Polymeren, Keramikfasern, Mineralfasern oder Glasfasern und Mischungen davon gebildet ist, und
wobei die textile Oberflächenstruktur einer Verstärkung durch thermoplastische und/oder chemische Bindemittel oder durch physikalische Nadelungsverfahren und/oder die Einwirkung von Druck ausgesetzt wurde, bevor sie mit dem B-Stage-Bindemittel versehen wurde,
c) mindestens ein funktionelles Material, das auf die mit den B-Stage-Bindemittel versehene textile Oberflächenstruktur aufgebracht ist, wobei das funktionelle Material ein Flammschutzmittel, ein Material zum Entladen elektrostatischer Ladungen, ein Material zum Abschirmen von elektromagnetischen Strahlen, ein organisches oder anorganisches Pigment, insbesondere ein Farbpigment, eine Antirutschbeschichtung und/oder eine Beschichtung mit erhöhtem Verschleißschutz, wobei die Antirutschbeschichtung SiC- und/oder SiO₂-Partikel einschließt, vorzugsweise mit einer Korngröße von 2 bis 5 mm, und die Beschichtung mit erhöhtem Verschleißschutz SiC- und/oder SiO₂-Partikel einschließt, deren Körnung unter 1 mm liegt, oder Dekorpapier ist,
d) gegebenenfalls weitere Schutzschichten, die auf dem funktionellen Material aufgebracht sind.

13. Verbundmaterial nach Anspruch 12, **dadurch gekennzeichnet, dass** der Träger in den Ansprüchen 2 bis 4 definiert ist.

14. Verbundmaterial nach Anspruch 12, **dadurch gekennzeichnet, dass** die textile Oberflächenstruktur in den Ansprüchen 5 bis 9 definiert ist.

15. Verbundmaterial nach Anspruch 12, **dadurch gekennzeichnet, dass** das B-Stage-Bindemittel in Anspruch 10 definiert ist.

16. Verbundmaterial nach Anspruch 12, **dadurch gekennzeichnet, dass** das funktionelle Material in Form einer unabhängigen Schicht vorliegt, die im B-Stage auf der dem Träger abgewandten Seite der textilen Oberflächenstruktur aufgebracht ist oder die textile Oberflächenstruktur ganz oder teilweise durchdringt.

17. Halbfertigprodukt, umfassend
a) einen Träger, wobei der Träger aus der Gruppe Holzwerkstoffe, Papiere, Kork, Pappen oder Mineralplatten ausgewählt ist, und
b) mindestens eine textile Oberflächenstruktur, die auf mindestens eine der beiden Seiten des Trägers aufgebracht ist, wobei die textile Oberflächenstruktur mindestens ein Bindemittel im B-Stage-Zustand aufweist und mindestens ein funktionelles Material aufweist, das auf der mit dem B-Stage-Bindemittel versehenen textilen Oberflächenstruktur aufgebracht ist, wobei es sich bei der textilen Oberflächenstruktur um ein Vlies handelt, das aus Fasern von synthetisierten Polymeren, Keramikfasern, Mineralfasern oder Glasfasern und Mischungen davon gebildet ist, wobei die textile Oberflächenstruktur einer zusätzlichen Verstärkung durch thermoplastische und/oder chemische Bindemittel oder durch physikalische Nadelungsverfahren ausgesetzt wurde, bevor sie mit dem B-Stage-Bindemittel versehen wurde, und wobei das funktionelle Material ein Flammschutzmittel, ein Material zum Entladen elektrostatischer Ladungen, ein Material zum Abschirmen von elektromagnetischen Strahlen, ein organisches oder anorganisches Pigment, insbesondere ein Farbpigment, eine Antirutschbeschichtung und/oder eine Beschichtung mit erhöhtem Verschleißschutz, wobei die Antirutschbeschichtung SiC- und/oder SiO₂-Partikel einschließt, vorzugsweise mit einer Korngröße von 2 bis 5 mm, und die Beschichtung mit erhöhtem Verschleißschutz SiC- und/oder SiO₂-Partikel einschließt, deren Körnung unter 1 mm liegt, oder Dekorpapier ist.

18. Halbfertigprodukt nach Anspruch 17, **dadurch gekennzeichnet, dass** der Träger in den Ansprüchen 2 bis 4 definiert ist.

19. Halbfertigprodukt nach Anspruch 17, **dadurch gekennzeichnet, dass** die textile Oberflächenstruktur in den Ansprüchen 5 bis 9 definiert ist.

20. Halbfertigprodukt nach Anspruch 17, **dadurch gekennzeichnet, dass** das B-Stage-Bindemittel in Anspruch 10 definiert ist.

21. Dekorative Halbfertigprodukte, umfassend mindestens eine textile Oberflächenstruktur, die aus Fasern von synthetisierten Polymeren, Keramikfasern, Mineralfasern oder Glasfasern und Mischungen davon gebildet ist und B-Stage-Bindemittel im B-Stage-Zustand enthält,
wobei die textile Oberflächenstruktur eine zusätzliche Verstärkung durch thermoplastische und/oder chemische Bindemittel oder durch physikalische Nadelungsverfahren und/oder die Einwirkung von Druck aufweist, bevor sie mit dem B-Stage-Bindemittel versehen wurde,
wobei die textile Oberflächenstruktur ein Vlies ist, umfassend mindestens eine Schicht aus einem funktionellen Material, wobei das funktionelle Material ein Flammschutzmittel, ein Material zum Entladen elektrostatischer Ladungen, ein Material zum Abschirmen von elektromagnetischen Strahlen, ein organisches oder anorganisches Pigment, insbesondere ein Farbpigment, eine Antirutschbeschichtung und/oder eine Beschichtung mit erhöhtem Verschleißschutz, wobei die Antirutschbeschichtung SiC- und/oder SiO₂-Partikel einschließt, vorzugsweise mit einer Korngröße von 2 bis 5 mm, und die Beschichtung mit erhöhtem Verschleißschutz SiC- und/oder SiO₂-Partikel einschließt, deren Körnung unter 1 mm liegt, oder Dekorpapier ist, und wobei mindestens ein funktionelles Material auf der mit dem B-Stage-Bindemittel versehenen textilen Oberflächenstruktur aufgebracht ist.

22. Dekorative Halbfertigprodukte nach Anspruch 21, **dadurch gekennzeichnet, dass** sie mindestens einen Träger umfassen, wobei der Träger aus der Gruppe Holzwerkstoffe, Papiere, Kork, Pappen oder Mineralplatten ausgewählt ist.

23. Dekorative Halbfertigprodukte nach Anspruch 21, **dadurch gekennzeichnet, dass** sie zwischen 1 und 25 Schichten der textilen Oberflächenstruktur umfassen.

24. Dekorative Halbfertigprodukte nach Anspruch 21, **dadurch gekennzeichnet, dass** sie zusätzlich mehrere Lagen Kraftpapier, imprägniert mit einem Melanin-, MUF oder Phenol-B-Stage-Bindermittel, umfassen.

## Revendications

1. Procédé de fabrication un matériau composite comprenant les mesures:
a) Fourniture d'un support, ledit support étant sélectionné du groupe formé de matériaux en bois, papier, liège, cartons ou plaques minérales,
b) Application d'une structure de surface textile sur au moins une surface du support, la structure de surface textile ayant au moins un liant dans l'état de stade B et ayant au moins un matériau fonctionnel ledit matériau fonctionnel est appliqué après le liant,
ladite structure de surface textile a été soumise à un renforcement par moyen des liants thermoplastiques et/ou chimiques ou par les procédés d'aiguilletage physiques et/ou l'action de la pression avant qu'elle soit pourvue avec le liant de stade B, ladite structure de surface textile est un non tissé formé de fibres de polymères synthétisés , fibres céramiques , fibres minérales ou fibres de verre et mélanges de ceux-ci, ledit matériau fonctionnel est un agent d'ignifuge, le matériau pour décharger les charges électrostatiques,
le matériau pour le filtrage des rayons électromagnétiques, le pigment organique ou inorganique, le pigment particulièrement coloré, un revêtement anti-glissement et/ou un revêtement avec une protection contre l'usure élevée, le revêtement anti-glissement incluant les particules de SiC et/ou de SiO₂, de préférence avec une taille du grain de 2 à 5 mm, et le revêtement avec une protection contre l'usure élevée incluant les particules de SiC et/ou de SiO₂ dont la taille du grain est inférieure à 1 mm, ou les papiers décoratifs,
c) Stratification de la construction obtenue selon l'étape b) sous l'action de la pression et de la chaleur de sorte que le liant présent dans le stade B reçoit son durcissement final,
d) Application optionnelle d'au moins une autre couche de protection et séchage.

2. Procédé selon la revendication 1, **caractérisé en ce que** les matériaux en bois sont des matériaux en bois en forme de plaques ou en forme de brins.

3. Procédé selon la revendication 2, **caractérisé en ce que** les matériaux en bois sont en bois contreplaqué ou stratifié, le matériau de copeaux de bois, préférablement les plaques de copeaux et OSB (Oriented Strand Boards- Plaques à Copeaux Orientés), le matériau en fibres de bois, préférablement les plaques de fibres de bois poreuses, les plaques de fibres de bois à diffusion ouverte, les plaques de fibres de bois dures (HDF) (haute densité) et les plaques de fibres de bois de densité moyenne (MDF), et l'Arboform.

4. Procédé selon la revendication 1, **caractérisé en ce que** les plaques minérales sont les plaques avec revêtement de carton sur les deux côtés, spécialement les plaques de fibres de gypse, les plaques de fibres céramiques, les plaques de ciment ou les plaques de chaux qui peuvent être renforcées avec des fibres naturelles et/ou synthétiques, où les derniers peuvent aussi comprendre les fibres minérales et/ou les fibres céramiques.

5. Procédé selon l'une quelconque des revendications 1 à 4, **caractérisé en ce que** le non tissé a en outre un renforcement de fibres, fils ou filaments.

6. Procédé selon l'une quelconque des revendications 1 à 5, **caractérisé en ce que** la structure de surface textile est un non tissé de fibres de verre de filaments et/ou de fibres discontinues.

7. Procédé selon la revendication 6, **caractérisé en ce que** le non tissé de fibres de verre comprend les microfibres de verre dont le diamètre moyen est entre 0,1 et 5 µm.

8. Procédé selon la revendication 6, **caractérisé en ce que** le non tissé de fibres de verre a un poids par l'unité de surface de 15 à 500 g/m², ou ces données se rapportent à une structure de surface sans liants.

9. Procédé selon l'une quelconque des revendications 1 à 8, **caractérisé en ce que** le non tissé est un non-tissé filé-lié.

10. Procédé selon la revendication 1, **caractérisé en ce que** le liant est un liant à base d'alcool furfurylique et formaldéhyde, de phénol formaldéhyde, de mélamine formaldéhyde, d'urée formaldéhyde et leur mélanges.

11. Procédé selon l'une quelconque des revendications 1 à 10, **caractérisé en ce que** la stratification dans l'étape c) a lieu par pressage discontinu ou continu ou par roulage.

12. Matériau composite comprenant :
a) un support, ledit support étant sélectionné du groupe de matériaux en bois, papier, liège, cartons ou plaques minérales, et
b) au moins une structure de surface textile appliquée sur au moins l'un des deux côtés du support, laquelle structure de surface comprend au moins un liant de stade B finalement durci, ladite structure de surface textile est un non tissé étant formé de fibres de polymères synthétisés , fibres céramiques, fibres minérales ou fibres de verre et mélanges de ceux-ci, et
ladite structure de surface textile a été soumise à un renforcement par liants thermoplastiques et/ou chimiques ou par les procédés d'aiguilletage physiques et/ou par l'action de la pression avant qu'elle soit pourvue avec le liant de stade -B,
c) au moins un matériau fonctionnel appliqué sur le dessus de la structure de surface textile pourvue avec le liant de stade B, ledit matériau fonctionnel est un agent ignifuge, le matériau pour décharger les charges électrostatiques, le matériau pour le filtrage des rayons électromagnétiques, le pigment organique ou inorganique, le pigment particulièrement coloré, un revêtement anti glissement et/ou un revêtement avec une protection contre l'usure élevée, le revêtement anti-glissement incluant les particules de SiC et/ou de SiO₂, de préférence avec une taille du grain de 2 à 5 mm, et le revêtement avec une protection contre l'usure élevée incluant les particules de SiC et/ou de SiO₂ dont la taille du grain est inférieure à 1 mm, ou les papiers décoratifs,
d) autres couches de protection optionnelles appliquées sur le matériau fonctionnel.

13. Matériau composite selon la revendication 12, **caractérisé en ce que** le support est défini dans les revendications 2 à 4.

14. Matériau composite selon la revendication 12, **caractérisé en ce que** la structure de surface textile est définie dans les revendications 5 à 9.

15. Matériau composite selon la revendication 12, **caractérisé en ce que** le liant de stade B est défini dans la revendication 10.

16. Matériau composite selon la revendication 12, **caractérisé en ce que** le matériau fonctionnel est présent dans la forme d'une couche indépendante appliquée dans le stade B sur le côté de la structure de surface textile opposé au support ou pénètre totalement ou partialement la structure de surface textile.

17. Produit semi-fini comprenant
a) un support, ledit support étant sélectionné du groupe de matériaux en bois, papier, liège, cartons ou plaques minérales, et
b) au moins une structure de surface textile appliquée sur au moins l'un des deux surfaces du support, laquelle structure de surface textile comprend au moins un liant dans le stade B et ayant au moins un matériau fonctionnel appliqué sur le dessus de la structure de surface textile pourvue avec le liant de stade B, ladite structure de surface textile est un non tissé étant formé de fibres de polymères synthétisés , fibres céramiques , fibres minérales ou fibres de verre et mélanges de ceux-ci, et où la structure de surface textile a un renforcement additionnel par liants thermoplastiques et/ou chimiques ou par les procédés d'aiguilletage physiques avant qu'elle soit pourvue avec le liant de stade B et ledit matériau fonctionnel est un agent ignifuge, le matériau pour décharger les charges électrostatiques, le matériau pour le filtrage des rayons électromagnétiques, le pigment organique ou inorganique, le pigment particulièrement coloré, un revêtement anti-glissement et/ou un revêtement avec une protection contre l'usure élevée, le revêtement anti-glissement incluant les particules de SiC et/ou de SiO₂, de préférence avec une taille du grain de 2 à 5 mm, et le revêtement avec une protection contre l'usure élevée incluant les particules de SiC et/ou de SiO₂ dont la taille du grain est inférieure à 1 mm, ou le papier décoratif.

18. Produit semi-fini selon la revendication 17, **caractérisé en ce que** le support est défini dans les revendications 2 à 4.

19. Produit semi-fini selon la revendication 17, **caractérisé en ce que** la structure de surface textile est définie dans les revendications 5 à 9.

20. Produit semi-fini selon la revendication 17, **caractérisé en ce que** le liant de stade B est défini dans la revendication 10.

21. Produits semi-finis décoratifs contenant au moins une structure de surface textile étant formée de fibres de polymères synthétisés, fibres céramiques , fibres minérales ou fibres de verre et mélanges de ceux-ci, contenant le liant de stade B dans l'état de stade B,
ladite structure de surface textile a un renforcement additionnel par liants thermoplastiques et/ou chimiques ou par les procédés d'aiguilletage physiques et/ou l'action de la pression avant qu'elle soit pourvue avec le liant de stade B, ladite structure de surface textile est un non tissé comprenant au moins une couche de matériau fonctionnel, ledit matériau fonctionnel est un agent ignifuge, le matériau pour décharger les charges électrostatiques, le matériau pour le filtrage des rayons électromagnétiques, le pigment organique ou inorganique, le pigment particulièrement coloré, un revêtement anti-glissement et/ou un revêtement avec une protection contre l'usure élevée, le revêtement anti-glissement incluant les particules de SiC et/ou de SiO₂, de préférence avec une taille du grain de 2 à 5 mm, et le revêtement avec une protection contre l'usure élevée incluant les particules de SiC et/ou de SiO₂ dont la taille du grain est inférieure à 1 mm, ou le papier décoratif et ledit au moins un matériau fonctionnel étant appliqué sur le dessus de la structure de surface textile pourvue avec le liant de stade B.

22. Produits semi-finis décoratifs selon la revendication 21, **caractérisés en ce qu'**ils comprennent au moins un support, ledit support étant sélectionné du groupe de matériaux en bois, papier, liège, cartons ou plaques minérales.

23. Produits semi-finis décoratifs selon la revendication 21, **caractérisés en ce qu'**ils comprennent entre 1 et 25 couches de ladite structure de surface textile.

24. Produits semi-finis décoratifs selon la revendication 21, **caractérisés en ce qu'**ils comprennent en outre plusieurs couches de papier résistant imprégné avec une mélanine, un liant MUF ou de stade B à phénol.
